(19) Europäisches Patentamt
European Patent Office
Office européen des brevets

(11) EP 3 387 027 B1

# (12) EUROPEAN PATENT SPECIFICATION

(45) Date of publication and mention of the grant of the patent:
**14.02.2024 Bulletin 2024/07**

(21) Application number: **16798752.8**

(22) Date of filing: **22.11.2016**

(51) International Patent Classification (IPC):
***C08F 210/06*** *(2006.01)* ***C08J 5/18*** *(2006.01)*

(52) Cooperative Patent Classification (CPC):
(C-Sets available)
**C08F 210/06; B32B 27/08; B32B 27/32; C08J 5/18;**
B32B 2250/242; B32B 2307/31; B32B 2307/40;
B32B 2307/518; C08J 2323/14 (Cont.)

(86) International application number:
**PCT/EP2016/078415**

(87) International publication number:
**WO 2017/097578 (15.06.2017 Gazette 2017/24)**

## (54) PROPYLENE HEXENE COPOLYMERS

PROPYLEN-HEXEN COPOLYMERE

COPOLYMÈRE EN POLYPROPYLÈNE ET HEXENE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2015 EP 15199653**

(43) Date of publication of application:
**17.10.2018 Bulletin 2018/42**

(73) Proprietor: **Basell Poliolefine Italia S.r.l.**
**20121 Milano (IT)**

(72) Inventors:
- **CAVALIERI, Claudio**
  **44122 Ferrara (IT)**
- **MASSARI, Paola**
  **44122 Ferrara (IT)**
- **GRAZZI, Michele**
  **44122 Ferrara (IT)**
- **PELLEGATTI, Giampaolo**
  **44122 Ferrara (IT)**
- **PANTALEONI, Roberto**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 487 203**
**WO-A1-2012/093099**
**WO-A1-2014/154610**
**WO-A1-2015/062787**
**US-A1- 2011 118 370**
**US-B2- 8 779 062**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 387 027 B1

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/6545;**
**C08F 210/06, C08F 210/14, C08F 2500/05, C08F 2500/12, C08F 2500/26**

## Description

FIELD OF THE INVENTION

The present disclosure relates to copolymers of propylene with 1-hexene, particularly suited for preparing films, in particular biaxially oriented polypropylene films (BOPP) and cast films having a low seal initiation temperature.

BACKGROUND OF THE INVENTION

Copolymer of propylene and 1-hexene are already known in the art, for example WO 2006/002778 relates to a copolymer of propylene and 1-hexene having from 0.2 to 5 wt% of 1-hexene derived units. This copolymer have a molecular weight distribution of monomodal type and are used for pipes systems.

WO 2009/077287 relates to a a copolymer of propylene with hexene-1 containing from 5 to 9% by weight of recurring units derived from hexene-1, said copolymer having a melting temperature from 125°C to 140°C and Melt Flow Rate (ASTM D1238, 230°C/2.16 kg) from 0.1 to 3 g/10 min.

WO 2015/062787 relates to a multimodal copolymers of propylene and 1-hexene having a content of 1-hexene derived units ranging from 0.6 wt% to 3.0 wt% especially suitable for the production of industrial sheets.

The applicant found that it is possible to produce BOPP and cast films having an high value of haze and a low seal initiation temperature (SIT) by using a multimodal propylene 1-hexene copolymer.

SUMMARY OF THE INVENTION

Thus the present disclosure provides a propylene 1-hexene copolymer containing from 5.5 to 9.0% by weight, of 1-hexene derived units having:

a) two peaks in the DSC plot having a difference in height ranging from 0 to 5 mW;
b) the higher melting temperature, measured by DSC, ranging from 142.0 °C to 149.0 °C;
c) Melt Flow Rate (MFR, measured according to ASTM D 1238, 230°C/2.16 kg, i.e. at 230°C, with a load of 2.16 kg) from 3.5 to 8.0 g/10 min;
d) a solubility in xylene at 25° C equal to or lower than 25 % by weight, preferably equal to or lower than 20 % by weight; being higher than 12 wt%; wherein the DSC and the solubility in xylene measurements are performed according to the examples part of the description.

DETAILED DESCRIPTION OF THE INVENTION

The present disclosure provides a propylene 1-hexene copolymer containing from 5.5 to 9.0% by weight, preferably from 6.0 to 8.5% by weight, more preferably from 6.5 to 8.0% by weight of 1-hexene derived units having:

a) two peaks in the DSC plot having a difference in height ranging from 0 to 5 mW; preferably from 0 to 3 mW;
b) the higher melting temperature, measured by DSC, ranging from 142.0°C to 149.0°C; more preferably from 142.5°C to 145.0°C;
c) Melt Flow Rate (MFR, measured according to ASTM D 1238, 230°C/2.16 kg, i.e. at 230°C, with a load of 2.16 kg) from 3.5 to 8.0 g/10 min; preferably from 3.8 to 7.5 g/10 min; more preferably from 4.0 to 6.0 g/10 min;
d) a solubility in xylene at 25° C equal to or lower than 25 % by weight, preferably equal to or lower than 20 % by weight; being higher than 12 wt%;

wherein the DSC and the solubility in xylene measurements are performed according to the examples part of the description.

Preferably the difference of the melting temperature of the two peaks ranges from 5°C to 30°C; more preferably from 7°C to 15°C; even more preferably from 8°C to 12°C.

The propylene 1-hexene copolymer of the present disclosure contains only propylene and 1-hexene derived units.

A peak in the DSC curve (temperature/heat of fusion(mW)) is defined as a point on the DSC curve (temperature/heat of fusion(mW)) having the highest value of heat of fusion at a temperature A with respect to the values of heat of fusion (mW) in the range ± 1 °C with respect to temperature A. The said amounts of 1-hexene units are referred to the total weight of the copolymer. The melting temperature values are determined by differential scanning calorimetry (DSC), according to ISO 11357-3, with a heating rate of 20 °C/minute.

The propylene 1-hexene copolymer of the present disclosure are endowed with a low HAZE and a low seal

initiating temperature (SIT) so that this material can be advantageously used for the production of film in particular cast or BOPP films.

The propylene 1-hexene copolymer of the present disclosure can be obtained with polymerization processes carried out in the presence of stereospecific Ziegler-Natta catalysts supported on magnesium dihalides. By properly dosing the molecular weight regulator (preferably hydrogen).

The polymerization process, which can be continuous or batch, is carried out following known techniques and operating in gas phase, or in liquid phase in the presence or not of inert diluent, or by mixed liquid-gas techniques. It is preferable to carry out the polymerization in gas phase in two reactors.

Polymerization reaction time, pressure and temperature are not critical, however it is best if the temperature is from 20 to 100°C. The pressure can be atmospheric or higher.

As previously mentioned, the regulation of the molecular weight is carried out by using known regulators, hydrogen in particular.

The said stereospecific polymerization catalysts comprise the product of the reaction between:

1) a solid component, containing a titanium compound and an electron-donor compound (internal donor) supported on magnesium dihalide (preferably chloride);
2) an aluminum alkyl compound (cocatalyst); and, optionally,
3) an electron-donor compound (external donor).

Said catalysts are preferably capable of producing homopolymers of propylene having an isotactic index higher than 90% (measured as weight amount of the fraction insoluble in xylene at room temperature).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters and succinic acid esters.

Suitable succinic acid esters are represented by the formula (I):

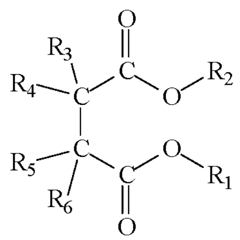 (I)

wherein the radicals $R_1$ and $R_2$, equal to or different from each other, are a C1-C20 linear or branched alkyl, alkenyl, cycloalkyl, aryl, arylalkyl or alkylaryl group, optionally containing heteroatoms; the radicals $R_3$ to $R_6$ equal to or different from each other, are hydrogen or a C1-C20 linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably C1-C8 alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). Examples of the said silicon compounds are those of formula $R_a^1R_b^2Si(OR^3)_c$, where a and b are integer numbers from 0 to 2, c is an integer from 1 to 3 and the sum (a+b+c) is 4; $R^1$, $R^2$, and $R^3$ are alkyl, cycloalkyl or aryl radicals with 1-18 carbon atoms optionally containing heteroatoms.

Thexyltrimethoxysilane (2,3-dimethyl-2-trimethoxysilyl-butane) is particularly preferred.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The copolymer of the present disclosure can also contain additives commonly used for olefin polymers like, for example, nucleating and clarifying agents and processing aids.

The propylene 1-hexene copolymer of the present invention can be advantageously used for the production of films. Preferably cast or BOPP film mono or multilayer wherein at least one layer comprises the propylene 1hexene copolymer of the present disclosure.

The following examples are given to illustrate the present invention without limiting purpose

EXAMPLES

The data relating to the polymeric materials and the films of the examples are determined by way of the methods reported below.

Melting temperature (ISO 11357-3)

Determined by differential scanning calorimetry (DSC). A sample weighting 6 $\pm$ 1 mg, is heated to 200 $\pm$ 1° C at a rate of 20 °C/min and kept at 200 $\pm$ 1° C for 2 minutes in nitrogen stream and it is thereafter cooled at a rate of 20° C/min to 40 $\pm$ 2° C, thereby kept at this temperature for 2 min to crystallise the sample. Then, the sample is again fused at a temperature rise rate of 20° C/min up to 200° C $\pm$ 1. The melting scan is recorded, a thermogram is obtained (°C vs. mW), and, from this, temperatures corresponding to peaks are read. The temperature corresponding to the most intense melting peak recorded during the second fusion is taken as the melting temperature.

Melt Flow Rate (MFR)

Determined according to ASTM D 1238, at 230° C, with a load of 2.16 kg.

Solubility in xylene at 25°C

2.5 g of polymer and 250 ml of xylene are introduced in a glass flask equipped with a refrigerator and a magnetical stirrer. The temperature is raised in 30 minutes up to the boiling pint of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Intrinsic viscosity (IV)

Determined in tetrahydronaphthalene at 135° C.

Determination of 1-hexene content by NMR

$^{13}C$ NMR spectra are acquired on an AV-600 spectrometer operating at 150.91 MHz in the Fourier transform mode at 120 °C. The peak of the propylene CH was used as internal reference at 28.83. The $^{13}C$ NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program | ZGPG |
| Pulse Length (P1) | for 90° |
| Total number of points (TD) | 32K |
| Relaxation Delay | 15 s |
| Number of transients | 1500 |

The total amount of 1-hexene as molar percent is calculated from diad using the following relations:

$$[P] = PP + 0.5PH$$

$$[H] = HH + 0.5PH$$

Assignments of the $^{13}C$ NMR spectrum of propylene/1-hexene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma}+ S_{\alpha\delta}$ | PE |
| 5 | 35.70 -35.0 | $4B_4$ | H |
| 6 | 35.00 - 34.53 | $S_{\alpha\gamma}+ S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $3_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

**Seal Initiation Temperature (SIT)**

**Preparation of the film specimens**

Some films with a thickness of 50 μm are prepared by extruding each test composition in a a single screw Collin extruder (length/diameter ratio of screw 1:25) at a film drawing speed of 7 m/min and a melt temperature do 210-250 °C. Each resulting film is superimposed on a 1000 μm thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a TOM Long film stretcher at 150°C, thus obtaining a 20 μm thick film (18 μm homopolymer+2 μm test). 2x5 cm specimens are cut from the films.

**Determination of the SIT.**

For each test two of the above specimens are superimposed in alignment, the adjacent layers being layers of the particular test composition. The superimposed specimens are sealed along one of the 2 cm sides with a Brugger Feinmechanik Sealer, model HSG-ETK 745. Sealing time is 5 seconds at a pressure of 0.1 $N/mm^2$. The sealing temperature is increased of 2°C for each seal, starting from about 10 °C less than the melting temperature of the test composition. The sealed samples are left to cool and then their unsealed ends are attached to an Instron machine where they are tested at a traction speed of 50 mm/min.

The SIT. is the minimum sealing temperature at which the seal does not break when a load of at least 2 Newtons is applied in the said test conditions.

**Determination of the Haze**

50 μm film speciments prepared as described above for the SIT measure have been used. The haze value is measured using a Gardner photometric unit connected to a Hazemeter type UX-10 or an equivalent instrument having G.E. 1209 light source with filter "C". Reference samples of known haze are used for calibrating the instrument.

**PREPARATION OF THE COPOLYMER OF PROPYLENE WITH 1-HEXENE**

The copolymer is prepared as follows.

The solid catalyst component used in polymerization is a highly stereospecific Ziegler-Natta catalyst component supported on magnesium chloride, containing about 2.2% by weight of titanium and diisobutylphthalate as internal donor, prepared by analogy with the method described in WO03/054035 for the preparation of catalyst component A .

**CATALYST SYSTEM AND PREPOLYMERIZATION TREATMENT**

Before introducing it into the polymerization reactor, the solid catalyst component described above is contacted at 15 °C for about 6 minutes with aluminum triethyl (TEAL) and thexyltrimethoxysilane (2,3-dimethyl-2-trimethoxysilylbutane), in a TEAL/ thexyltrimethoxysilane weight ratio equal to about 7 and in such quantity that the TEAL/solid catalyst component weight ratio be equal to about 6.

The catalyst system is then subjected to prepolymerization by maintaining it in suspension in liquid propylene at 20 °C for about 20 minutes before introducing it into the polymerization reactor.

**POLYMERIZATION EXAMPE 1**

The polymerization is carried out in a two gas phase polymerization reactors by feeding in a continuous and constant flow the prepolymerized catalyst system, hydrogen (used as molecular weight regulator), propylene and 1-hexene in the gas state.

The main polymerization conditions are reported in table 1

Table 1

| | | first reactor | second reactor |
|---|---|---|---|
| Temperature: | °C | 75 | 75 |
| Pressure | bar-g | 16 | 16 |

(continued)

| | | first reactor | second reactor |
|---|---|---|---|
| residence time | min | 46 | 46 |
| C6/C6+C3 | mol/mol | 0.010 | 0.022 |
| H2/C3 | mol/mol | 0.016 | 0.017 |
| C3 = propylene; C6 = 1-hexene H2 = hydrogen | | | |

The polymer particles exiting the reactor are subjected to a steam treatment to remove the reactive monomers and volatile substances, and then dried.

The property of the copolymer obtained in example 1 are reported in table 2.

Table 2

| | | Ex 1 | comp ex 2 |
|---|---|---|---|
| 1-hexene content | wt% | 7.4 | 7.3 |
| MFR | g/10 min | 4.4 | 0.3 |
| xylene solubles 25°C | wt% | 18.0 | 18.1 |
| melting temperatures | °C | 135.1-143.7 | 132.2 one peack |
| Height DSC | mW | 22-24 | nm |
| Haze (film) | % | 0.55 | 3 |
| SIT | °C | 91°C | nm |
| nm= not measured | | | |

Comparative example 2 is the copolymer of the example of WO 2009/077287 wherein haze on a cast 50 μm film has been measured.

From table 1 the copolymer of example 1 has a better haze with respect to the copolymer of comparative example 2 even if the 1-hexene derived units content and the xylene solubles are about the same.

**Claims**

1. A propylene 1-hexene copolymer containing from 5.5 to 9.0% by weight, of 1-hexene derived units having:

    a) two peaks in the DSC plot having a difference in height ranging from 0 to 5 mW;
    b) the higher melting temperature, measured by DSC, ranging from 142.0°C to 149.0°C;
    c) Melt Flow Rate (MFR), measured according to ASTM D 1238, 230°C/2.16 kg, from 3.5 to 8.0 g/10 min;
    d) a solubility in xylene at 25° C equal to or lower than 25 % by weight, being higher than 12 wt%; wherein the DSC and the solubility in xylene measurements are performed according to the examples part of the description.

2. The propylene 1-hexene copolymer according to claim 1 containing from 6.0 to 8.5% by weight of 1-hexene derived units.

3. The propylene 1-hexene copolymer according to claims 1 or 2 containing from from 6.5 to 8.0% by weight of 1-hexene derived units.

4. The propylene 1-hexene copolymer according to anyone of claims 1-3 wherein the difference of the melting temperature of two peaks ranges from 5°C to 30°C.

5. The propylene 1-hexene copolymer according to anyone of claims 1-4 wherein the difference of the melting temperature of two peaks ranges from 7°C to 15°C.

6. The propylene 1-hexene copolymer according to anyone of claims 1-5 having a solubility in xylene at 25° C equal to or lower than 20% by weight, being higher than 12 wt%.

7. The propylene 1-hexene copolymer according to anyone of claims 1-6 wherein the Melt Flow Rate ranges from 3.8 to 7.5 g/10 min.

8. The propylene 1-hexene copolymer according to anyone of claims 1-7 wherein the Melt Flow Rate ranges from 4.0 to 6.0 g/10 min

9. A film comprising the propylene 1-hexene copolymer of claims 1-8.

10. A BOPP film according to claim 9 comprising the propylene 1-hexene copolymer of claims 1-9.

**Patentansprüche**

1. Propylen-1-Hexen-Copolymer, das 5,5 bis 9,0 Gew.% von 1-Hexen abgeleitete Einheiten enthält, und aufweist:

   a) zwei Peaks im DSC-Plot mit einer Höhendifferenz im Bereich von 0 bis 5 mW;
   b) wobei die höhere Schmelztemperatur, gemessen mittels DSC, im Bereich von 142,0 °C bis 149,0 °C liegt;
   c) eine Schmelzflussrate (MFR), gemessen gemäß ASTM D 1238, 230 °C/2,16 kg, von 3,5 bis 8,0 g/10 min.;
   d) eine Löslichkeit in Xylol bei 25 °C gleich oder kleiner als 25 Gew.% und höher als 12 Gew.%;

   wobei die Messungen der DSC und der Löslichkeit in Xylol gemäß dem Beispielabschnitt der Beschreibung durchgeführt werden.

2. Propylen-1-Hexen-Copolymer nach Anspruch 1, das 6,0 bis 8,5 Gew.% von 1-Hexen abgeleitete Einheiten enthält.

3. Propylen-1-Hexen-Copolymer nach Anspruch 1 oder 2, das 6,5 bis 8,0 Gew.% von 1-Hexen abgeleitete Einheiten enthält.

4. Propylen-1-Hexen-Copolymer nach einem der Ansprüche 1 bis 3, wobei die Differenz der Schmelztemperatur der beiden Peaks im Bereich von 5 °C bis 30 °C liegt.

5. Propylen-1-Hexen-Copolymer nach einem der Ansprüche 1 bis 4, wobei die Differenz der Schmelztemperatur der beiden Peaks im Bereich von 7 °C bis 15 °C liegt.

6. Propylen-1-Hexen-Copolymer nach einem der Ansprüche 1 bis 5 mit einer Löslichkeit in Xylol bei 25 °C gleich oder kleiner als 20 Gew.% und höher als 12 Gew.%.

7. Propylen-1-Hexen-Copolymer nach einem der Ansprüche 1 bis 6, wobei die Schmelzflussrate im Bereich von 3,8 bis 7,5 g/10 min liegt.

8. Propylen-1-Hexen-Copolymer nach einem der Ansprüche 1 bis 7, wobei die Schmelzflussrate im Bereich von 4,0 bis 6,0 g/10 min liegt.

9. Film, umfassend das Propylen-1-Hexen-Copolymer nach den Ansprüchen 1 bis 8.

10. BOPP-Film nach Anspruch 9, umfassend das Propylen-1-Hexen-Copolymer nach den Ansprüchen 1 bis 9.

**Revendications**

1. Copolymère de propylène-1-hexène contenant 5,5 à 9,0 % en poids de motifs dérivés de 1-hexène, présentant :

   a) deux pics dans le diagramme de DSC présentant une différence de hauteur située dans la plage de 0 à 5 mW ;
   b) la température de fusion plus élevée, mesurée par DSC, située dans la plage de 142,0 °C à 149,0 °C ;
   c) un indice de fluidité à chaud (MFR, mesuré selon la norme ASTM D 1238, 230 °C/2,16 kg) de 3,5 à 8,0 g/10 min ;

d) une solubilité dans le xylène à 25 °C égale ou inférieure à 25 % en poids et supérieure à 12 % en poids, les mesures de DSC et de solubilité dans le xylène étant réalisées selon la partie des exemples de la description.

**2.** Copolymère de propylène-1-hexène selon la revendication 1, contenant 6,0 à 8,5 % en poids de motifs dérivés de 1-hexène.

**3.** Copolymère de propylène-1-hexène selon les revendications 1 ou 2, contenant 6,5 à 8,0 % en poids de motifs dérivés de 1-hexène.

**4.** Copolymère de propylène-1-hexène selon l'une quelconque des revendications 1 à 3, la différence de la température de fusion des deux pics étant située dans la plage de 5 °C à 30 °C.

**5.** Copolymère de propylène-1-hexène selon l'une quelconque des revendications 1 à 4, la différence de la température de fusion des deux pics étant située dans la plage de 7 °C à 15 °C.

**6.** Copolymère de propylène-1-hexène selon l'une quelconque des revendications 1 à 5, présentant une solubilité dans le xylène à 25 °C égale ou inférieure à 20 % en poids et supérieure à 12 % en poids.

**7.** Copolymère de propylène-1-hexène selon l'une quelconque des revendications 1 à 6, l'indice de fluidité à chaud étant situé dans la plage de 3,8 à 7,5 g/10 min.

**8.** Copolymère de propylène-1-hexène selon l'une quelconque des revendications 1 à 7, l'indice de fluidité à chaud étant situé dans la plage de 4,0 à 6,0 g/10 min.

**9.** Film comprenant le copolymère de propylène-1-hexène selon les revendications 1 à 8.

**10.** Film en BOPP selon la revendication 9, comprenant le copolymère de propylène-1-hexène selon les revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006002778 A
- WO 2009077287 A
- WO 2015062787 A
- US 4399054 A
- EP 45977 A
- EP 361493 A
- EP 728769 A
- WO 03054035 A